Europäisches Patentamt

European Patent Office

Office européen des brevets

(19)

(11) **EP 0 921 101 A2**

(12) **EUROPÄISCHE PATENTANMELDUNG**

(43) Veröffentlichungstag:
  **09.06.1999 Patentblatt 1999/23**

(51) Int. Cl.$^6$: **C02F 1/52**, C02F 1/28

(21) Anmeldenummer: **98123119.4**

(22) Anmeldetag: **04.12.1998**

(84) Benannte Vertragsstaaten:
  **AT BE CH CY DE DK ES FI FR GB GR IE IT LI LU MC NL PT SE**
  Benannte Erstreckungsstaaten:
  **AL LT LV MK RO SI**

(30) Priorität: **06.12.1997 DE 19754173**

(71) Anmelder:
  **Bilfinger + Berger Umweltverfahrenstechnik GmbH**
  **68165 Mannheim (DE)**

(72) Erfinder:
  • **Ecker, Michael, Dr.**
    **68167 Mannheim (DE)**
  • **Strassner, Dirk**
    **68535 Edingen (DE)**

(54) **Verfahren zur Wasserreinigung**

(57)  Vorgeschlagen wird ein Verfahren zur Reinigung schadstoffbelasteter Wässer durch Absorption und/oder Adsorption. Erfindungsgemäß werden dazu die im Wasser enthaltenen Schadstoffe an Calciumferrathydrate ab- und/oder adsorbiert.

*Fig. 2*

Printed by Xerox (UK) Business Services
2.16.7/3.6

**Beschreibung**

Die Erfindung betrifft ein Verfahren zur Reinigung schadstoffbelasteter Wässer durch Absorption und/oder Adsorption.

In vielen Bereichen der Industrie fallen sehr stark verschmutzte Wässer an, wie z.B. Wasser, welches zur Reinigung von Behältern verwendet wird oder Kreislaufwasser bei der Porenbeton- oder Kalksandsteinherstellung. Auch im Bereich der Sanierung von Altlasten ist die Abreinigung verschmutzten Wassers notwendig. Die auftretenden Verunreinigungen sind vielfältiger Natur und treten in der Praxis häufig nebeneinander auf. Ganz allgemein kann eine Wasserverunreinigung entweder aus gelösten Stoffen oder aus im Wasser dispergierten Stoffen bestehen. Zur Reinigung dieser Wässer müssen technisch sehr aufwendige und teure Verfahren verwendet werden wie etwa die Ultrafiltration oder die Umkehrosmose. Häufig verbleibt ein giftiges Restkonzentrat, welches aufwendig und sehr teuer entsorgt werden muss.

Der Stand der Technik beschreibt mehrere Möglichkeiten, um Schadstoffe aus dem Wasser zu entfernen. So ist aus der EP 0 518 379 ein Verfahren bekannt, um organische oder anorganische Schadstoffe mit Hilfe wasserlöslicher Aluminate zu entfernen. Die genannten Schadstoffe werden durch Chemisorption aus dem Wasser entfernt, wobei als Absorbens entweder eine wäßrige Lösung eines oder mehrerer wasserlöslicher Aluminate bei einer Konzentration, die die Ausfällung von Aluminiumhydroxid ausschließt, oder ein Absorptionsmittel dient, das erhältlich ist aus einem oder mehreren wasserlöslichen Aluminaten und einer oder mehreren in Wasser ganz oder teilweise löslichen Calciumverbindungen in Wasser, sowie gegebenenfalls in Gegenwart eines oder mehrerer Carbonate und/oder Kohlendioxid und/oder eines Kohlendioxid enthaltenden Gases. Die Absorptionsmittel weisen lamellare Schichtstrukturen auf und entsprechen dem Typus $[Ca_4 Al_2 (OH)_{12}]^{2+} [CO_3 aq]^{2-}$, $[Ca_4 Al_2 (OH)_{12}]^{2+} [OH/0,5 CO_3 aq]^{2-}$ und/oder $[Ca_4 Al_2 (OH)_{12}]^{2+} [(OH)_2 aq]^{2-}$, wobei aq Kristallwasser darstellt.

Dieses Verfahren besitzt nun den Nachteil, daß dazu der Einsatz von teuren Aluminaten wie beispielsweise Natriumaluminat oder Tonerdezement notwendig ist. In der Praxis ist dieses Verfahren zur Reinigung großer Mengen verunreinigten Wassers daher unwirtschaftlich.

Ausgehend von diesem Stand der Technik liegt der Erfindung die Aufgabe zugrunde, ein Verfahren der eingangs beschriebenen Gattung zu schaffen, das die genannten Nachteile vermeidet und insbesondere die Reinigung schadstoffbelasteter Wässer durch Absorption und/oder Adsorption erlaubt, ohne Aluminate zu verwenden.

Das erfindungsgemäße Verfahren löst die voranstehende Aufgabe durch die kennzeichnenden Merkmale des Patentanspruchs 1. Danach werden die im Wasser enthaltenen Schadstoffe an Calciumferrathydraten ab- und/oder adsorbiert.

Erfindungsgemäß ist erkannt worden, daß es möglich ist, im Wasser enthaltene Schadstoffe an laminaren Calciumferrathydraten zu adsorbieren oder in laminaren Calciumferrathydraten zu absorbieren bzw. chemisch zu fixieren. Überraschenderweise hat sich gezeigt, daß ein Gemisch von Eisenhydroxid und Calciumhydroxid in Wasser sehr schnell zu Calciumferrathydraten reagiert, die als Flocken ausfallen. Diese Calciumferrathydrate besitzen folgenden grundsätzlichen chemischen Aufbau:

$$3 CaO \cdot Fe_2O_3 \cdot CaY \cdot n H_2O$$

$$3 CaO \cdot Fe_2O_3 \cdot CaX_2 \cdot n H_2O$$

wobei

$X = OH^-, Cl^-, Br^-, I^-, NO^{3-}, NO^{2-}$
$Y = SO_3^{2-}, SO_4^{2-}, CrO_4^{2-}, S2O_3^{2-}, CO_3^{2-}, HBO_3^{2-}$
$n = 6\text{-}18$

Zwischen den jeweiligen Phasen ist ausgeprägte Mischkristallbildung möglich. Die Calciumferrathydrate bilden kristallchemisch gesehen komplexe Doppelschichtstrukturen, die aus einer positiv geladenen Hauptschicht der Form

$$[Ca_2 Fe(OH)_6]^+$$

und einer negativ geladenen Zwischenschicht der Form

$$[X \cdot n H_2O]^- \text{ bzw. } [ * Y \cdot n H_2O]^-$$

bestehen. Die Phasen kristallisieren in hexagonaler bzw. pseudohexagonaler Symmetrie und bilden Plättchen von wenigen μm Durchmesser.

Die Calciumferrathydrate entfalten nun in zweifacher Weise ihre Wirkung. Zum einen werden die Schadstoffe während der Bildung dieser Substanzen in das Kristallgitter der enthehenden Calciumferrathydrate eingebaut und damit absorbiert bzw. chemisch fixiert. Der Einbau der schädlichen Substanzen erfolgt dabei entweder in der negativ geladenen Zwischenschicht (Anionen) oder in die positiv geladene Hauptschicht (Kationen). Zum anderen zeichnen sich die Calciumferrathydrate aufgrund ihres plättchenförmigen Habitus durch eine sehr große Oberfläche aus, an der die Schadstoffe durch vander-Waals-Wechselwirkung physikalisch adsorbiert werden können.

Nach der Erfindung ist es möglich, als Ausgangssubstanzen für die Ab- und Adsorptionsmittel Eisenhydroxid und Calciumhydroxid und/oder Calciumoxid zu verwenden. Die Ab- und Adsorptionsmittel können in situ während des Reinigungsvorgangs gebildet werde Vorteilhafterweise liegt das Massenverhältnis zwischen Eisen und Calcium zwischen 0,35 und 7. Die Reaktionszeit für die Bildung laminarer Calciumferrathydratphasen liegt zwischen 1 Minute und 180 Minuten. Vorzugsweise wird das Eisenhydroxid und/oder Calciumhydroxid und/oder Calciumoxid dem zu reinigenden Wasser hinzugesetzt. Die Durchmischung erfolgt mittels Schrägblattrührer oder mittels Suspender oder mittels Zwangsmischer. Eine weitere vorteilhafte Ausgestaltung der Erfindung besteht darin, daß Eisenhydroxid und/oder Calciumhydroxid und/oder Calciumoxid vor der Zugabe zu dem zu reinigenden Wasser zu einem Pulver oder Granulat vermischt werden. Es ist weiterhin möglich, Eisenhydroxid und/oder Calciumhydroxid und/oder Calciumoxid vor der Zugabe zu dem zu reinigenden Wasser zu einer wässrigen Suspension zu vermischen. Es besteht außerdem die Möglichkeit, Calciumhydroxid in Form von Kalkmilch zuzugeben.

Besonders hervorgehoben sei die Möglichkeit, als Eisenhydroxidträger Enteisenungsrückstände aus der Wasseraufbereitung einzusetzen. Diese Rückstände fallen in großen Mengen bei der Trinkwasseraufbereitung an und können vor der Zugabe von Calciumhydroxid und/oder Calciumoxid mit Wasser zu einer fließfähigen Masse vermischt werden. Vorteilhafterweise wird der pH-Wert des zu reinigenden Wassers auf einen Wert von 7 bis 14 eingestellt. Der Temperaturbereich für die Bildung von Calciumferrathydraten liegt bevorzugt zwischen 5° C und 100° C.

Ein besonderer Vorteil der Erfindung ist es, daß sich die gebildeten Calciumferrathydrate aufgrund ihres hohen spezifischen Gewichts sehr schnell als Sediment absetzen, welches von dem überstehenden Wasser abgetrennt werden kann. Das Absetzen der Calciumferrathydrate erfolgt z. B. in einem Schrägplattenklärer. Die Sedimentation wird durch die Zugabe eines Flockungshilfsmittels beschleunigt. Sollte das gereinigte Wasser nicht den vorgegebenen Sollwerten entsprechen, so kann es mittels eines Rücklaufs wieder in den Rührreaktor zurückgeführt und nochmals behandelt werden. Das abgetrennte Sediment wird entwässert. Diese Entwässerung geschieht vorzugsweise unter Einsatz eine Kammerfilterpresse mit einem Pressendruck zwischen 1 und 7 bar. Der so erhaltene Filterkuchen weist einen Trockenrückstand von vorzugsweise 40 bis 70% auf.

Das Verfahren kann nun zur Entfernung verschiedenster Schadstoffe verwendet werden, so z.B. organische und anorganische Kationen, insbesondere Schwermetallkationen, oder organische und anorganische Anionen. Nach der Erfindung ist es aber auch möglich, dispergierte Feststoffe oder dispergierte Flüssigkeiten zu entfernen.

Es gibt nun verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Ansprüche, andererseits auf die nachfolgende Erläuterung von vier Ausführungsbeispielen der Erfindung verwiesen. In Verbindung mit der Erläuterung der bevorzugten Ausführungsbeispiele der Erfindung werden auch im allgemeinen bevorzugte Ausgestaltung und Weiterbildung der Lehre erläutert.

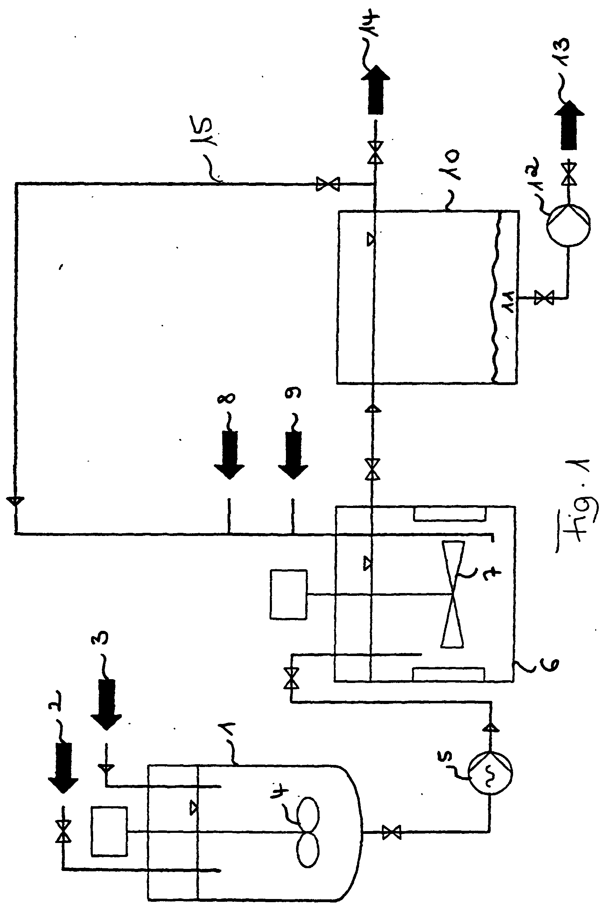

In Fig. 1 wird zunächst ein möglicher Aufbau einer erfindungsgemäßen Wasserreinigungsanlage dargestellt. In den Mischbehälter 1 werden Wasser 2 und da erfindungsgemäße Sorptionsmittel 3 eingegeben und mit einem Rührer 4 vermischt. Dieses Gemisch wird dann durch die Schlammpumpe 5 in den Rührreaktor 6 gepumpt. In den Rührreaktor 6 werden dann das zu reinigende Wasser 8 und eine Puffersubstanz 9 zugegeben und durch den Reaktionsrührer 7 vermischt. Dieses Gemisch wird in ein Sedimentationsbecken 10 geleitet, an dessen Boden sich ein Sediment 11 aus geflockten Teilchen absetzt. Das Sediment 11 wird durch eine Schlammaustragspumpe 12 aus dem Sedimentationsbecken 10 abgezogen und kann dann weiterverarbeitet werden. Das überstehende gereinigte Wasser 14 wird ebenfalls aus dem Sedimentationsbecken 10 abgezogen. Sollte das gereigte Wasser 14 nicht die vorgegebenen Sollwerte erfüllen, so kann es mittels eines Rücklaufs 15 wieder in den Rührreaktor 6 gegeben und nochmals behandelt werden.

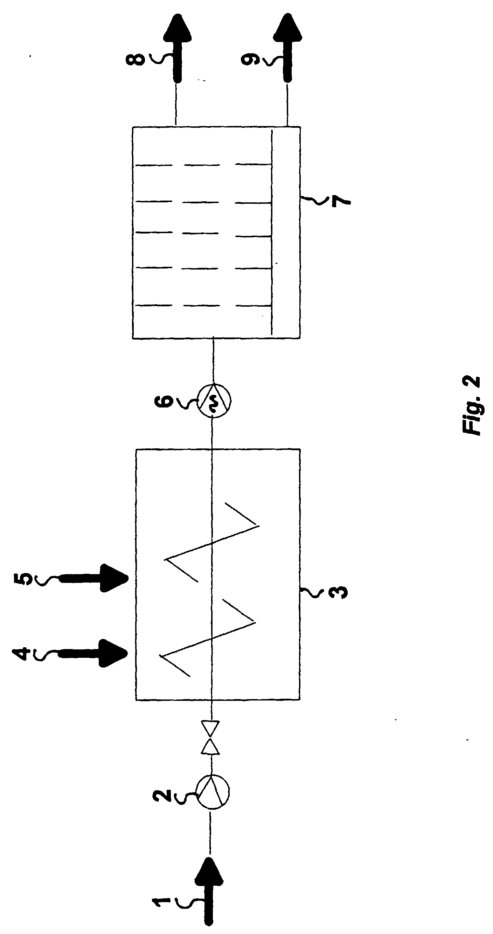

Figur 2 stellt einen weiteren möglichen Aufbau dar. Da zu reinigende Wasser 1 wird mittels Pumpe 2 in den Zwangsmischer 3 gepumpt und dort mit Eisenhydroxid 4 und Calciumhydroxid 5 vermischt. Das Gemisch wird mittels Excenterschneckenpumpe 6 über die Kammerfilterpresse 7 entwässert. Der dabei entstehende Filterkuchen 8 kann auf einer Deponie abgelagert werden. Das Filtratwasser 9 kann in den Wasserkreislauf zurückgeführt oder erneut in der Ultrafiltration oder Umkehrosmose gereinigt werden.

**Ausführungsbeispiel 1:**

Das erste Ausführungsbeispiel bezieht sich auf die Behandlung von Wasser aus der Reinigung von Farbbehältern, das vor der Behandlung 1,5 % Trockenrückstand enthielt. Das Pigmentteilchen enthaltende Wasser war schwarz gefärbt und undurchsichtig. 1000 ml dieses Wassers wurden mit 80 g eines eisenhaltigen Wasserwerkschlammes (c $Fe_2O_3$ = 10%) und mit 12 g Calciumhydroxid versetzt. Das Gemenge wurde 15 Minuten gerührt. Nach Abstellen des Rührers bildeten sich Flocken, die sich rasch absetzten. Nach 60 Minuten waren 850 ml Klarer Überstand mit einem Trockenrückstand von 0,37% vorhanden.

**Ausführungsbeispiel 2:**

Im zweiten Ausführungsbeispiel wurden 70 g Wasserwerksschlamm (c $Fe_2O_3$ = 10%) mit 10,5 g Calciumhydroxid und 140 ml Wasser 1 Stunde lang mit einem Rührer vermischt. Das Reaktionsprodukt wurde zu 1000 ml des Wassers aus Beispiel 1 gegeben und 15 Minuten gemischt. Nach Abstellen des Rührers bildeten sich sofort deutliche Flocken, die sich rasch absetzten. Nach 30 Minuten waren 1000 ml klarer Überstand mit einem Trockenrückstand von 0,32% vorhanden.

**Ausführungsbeispiel 3:**

Im dritten Ausführungsbeispiel wurde Konzentrat aus der Reinigung des Abwassers aus den Beispielen eins und zwei mittels Ultrafiltration und Umkehrosmose behandelt. Das Konzentrat enthielt 15% Trockenrückstand, war schwarz gefärbt und bereits zähflüssig. 2000ml dieses Konzentrats wurden in einem Zwangsmischer mit 800g Wasserwerkschlamm (c $Fe(OH)_3$ = 10%) und 96 g Calciumhydroxid 10 Minuten lang vermischt. Das entstandene zähe Gemenge wurde in einem Druckfilter bei 6 bar Druck abgepreßt. Der dabei entstandene Filterkuchen hatte einen Trockenrückstand von 47%. Das schwach gefärbte Filtratwasser wies einen Trockenrückstand von 0,7% auf. Eine derartige Behandlung kann in einer Wasserreinigungsanlage nach Figur 2 erfolgen.

**Ausführungsbeispiel 4:**

Im vierten Ausführungsbeispiel wurden 2000 l Wasser mit Kaliumsulfat versetzt, so daß sich eine Sulfationenkonzentration von 1500 mg/l einstellte. Das Wasser wurde in eine Wasserreinigungsanlage nach Fig. **1** gegeben. In dem Mischbehälter **1** wurden 55 kg Wasserwerksschlamm (c $Fe_2O_3$ = 10%) mit 7 kg Calciumhydroxid in 110 l Wasser vermischt. Das Reaktionsprodukt wurde mit einer Mohnopumpe in den Rührreaktor **6** gegeben. Nach 30 Minuten Reaktionszeit stellte sich eine Sulfatkonzentration von 200 mg/l ein. Das mit Sulfationen beladene Sediment **11** setzte sich im Sedimentationsbecken **10** ab und konnte mit einer Schlammaustragspumpe **12** entfernt werden.

**Bezugszeichenliste:**

| | |
|---|---|
| 1 | Mischbehälter |
| 2 | Wasser |
| 3 | Ab- und Adsorptionsmittel (Eisenhydroxid und Calciumhydroxid) |
| 4 | Rührer |
| 5 | Schlammpumpe |
| 6 | Rührreaktor |
| 7 | Reaktionsrührer |
| 8 | zu reinigendes Wasser |
| 9 | Puffersubstanz |
| 10 | Sedimentationsbecken |
| 11 | Sediment |
| 12 | Schlammaustragspumpe |
| 13 | Schlamm |
| 14 | gereinigtes Wasser |
| 15 | Rücklauf |

**Patentansprüche**

1.  Verfahren zur Reinigung schadstoffbelasteter Wässer durch Absorption und/oder Adsorption, **dadurch gekennzeichnet, daß** die im Wasser enthaltenen Schadstoffe an Calciumferrathydrate ab- und/oder adsorbiert werden.

2.  Verfahren nach Anspruch 1, dadurch gekennzeichnet, daß als Ausgangssubstanzen für die Absorptions- und Adsorptionsmittel (3) Eisenhydroxid und Calciumhydroxid und/oder Calciumoxid verwendet werden.

3.  Verfahren nach einem der Ansprüche 1 bis 2, dadurch gekennzeichnet, daß das Massenverhältnis von Eisen zu Calcium zwischen 0,35 und 7 liegt. wobei die Reaktionszeit für die Bildung von Calciumferrathydraten zwischen 1 Minute und 180 Minuten liegt.

4.  Verfahren nach einem der Ansprüche 1 bis 3, dadurch gekennzeichnet, daß Eisenhydroxid und/oder Calciumhydroxid und/oder Calciumoxid dem zu reinigenden Wasser (8) zugesetzt werden.

5.  Verfahren nach einem der Ansprüche 1 bis 4, dadurch gekennzeichnet, daß die Durchmischung mittels Schrägblattrührer oder mittels Suspender oder mittels Zwangsmischer erfolgt.

6.  Verfahren nach einem der Ansprüche 1 bis 5, dadurch gekennzeichnet, daß Eisenhydroxid und Calciumhydroxid und/oder Calciumoxid vor der Zugabe zu dem zu reinigenden Wasser (8) zu einem Pulver oder Granulat oder zu einer wässrigen Suspension vermischt werden.

7.  Verfahren nach einem der Ansprüche 1 bis 6, dadurch gekennzeichnet, daß als Eisenhydroxidträger Enteisenungsrückstände aus der Wasseraufbereitung verwendet werden.

8.  Verfahren nach einem der Ansprüche 1 bis 7, dadurch gekennzeichnet, daß die Reaktionstemperatur für die Bildung von Calciumferrathydraten zwischen 5°C und 100°C liegt.

9.  Verfahren nach einem der Ansprüche 1 bis 8, dadurch gekennzeichnet, daß sich die gebildeten Calciumferrathydrate als Sediment (**11**) in dem zu reinigenden Wasser absetzen.

10. Verfahren nach einem der Ansprüche 1 bis 9, dadurch gekennzeichnet, daß die Sedimentation durch Zugabe eines Flockungshilfsmittels beschleunigt wird.

11. Verfahren nach einem der Ansprüche 1 bis 10, dadurch gekennzeichnet, daß nicht vollständig gereinigtes Wasser aus dem Sedimentationsbekken (10) durch einen Rücklauf (15) in den Rührreaktor (6) zurückgeführt wird.

12. Verfahren nach einem der Ansprüche 1 bis 11, dadurch gekennzeichnet, daß das gebildete Sediment (11) von dem überstehenden Wasser abgetrennt und das abgetrennte Sediment (11) entwässert wird

13. Verfahren nach einem der Ansprüche 1 bis 12, dadurch gekennzeichnet, daß die zu entfernenden Schadstoffe organische oder anorganische Kationen , z. B. Schwermetallkationen und/oder organische oder anorganische Anionen und/oder dispergierte Feststoffe und/oder dispergierte Flüssigkeiten sind.

Fig. 1

EP 0 921 101 A2

**Fig. 2**

EP 0 921 101 A2